# EUROPEAN PATENT APPLICATION

(11) **EP 4 464 404 A1**
(43) Date of publication of application: **20.11.2024**
(21) Application number: 23740223.5
(22) Date of filing: 06.01.2023
(51) Int. Cl.: B01D 61/00, B01D 69/08, B01D 69/10, B01D 69/12, B01D 71/10, B01D 71/26, B01D 71/34, B01D 71/42, B01D 71/52, B01D 71/56, B01D 71/62, B01D 71/64, B01D 71/68, B01D 71/72

(54) **CONCENTRATION METHOD AND CONCENTRATION SYSTEM FOR RAW MATERIAL LIQUID**

(30) Priority: 14.01.2022 JP 2022004552
(71) Applicant: Asahi Kasei Kabushiki Kaisha, Tokyo 1000006 (JP)
(72) Inventor: TAKADA, Ryoichi, Tokyo 100-0006 (JP); OSAKI, Takahiro, Tokyo 100-0006 (JP); KATAYAMA, Yuji, Tokyo 100-0006 (JP)
(74) Representative: D Young & Co LLP
(86) International application number: PCT/JP2023/000173
(87) International publication number: WO 2023/136214

(57) **Abstract**

Provided are a raw material liquid concentration method and a raw material liquid concentration system that can achieve a high flux even when using a raw material liquid that is rich in an organic solvent. An aspect of the present invention provides a method for concentrating a raw material liquid, said method comprising a concentration step for bringing a raw material liquid and an induction solution in contact via a forward osmosis membrane. The raw material liquid contains not less than 50 mass% of an organic solvent and a valuable substance. The forward osmosis membrane has a base material layer and an active layer. Either the induction solution contains a hydrophobic induction solute and the active layer is hydrophilic, or the induction solution contains a hydrophilic induction solute and the active layer is hydrophobic.

## Description

### FIELD

The present invention relates to a concentration method and a concentration system for feed liquids.

### BACKGROUND

Organic solvent-rich feed liquids containing valuables are concentrated in various industries. When concentration without altering a valuable is desired, concentration by a forward osmosis membrane is particularly useful since application of heat and pressure is not required. At this time, when a volatile draw solute is used to carry out the concentration by a forward osmosis membrane, even if the draw solute is mixed into the feed liquid during concentration, the draw solute is removed in a step subsequent to the concentration step, for example, a drying step, a distillation step, a spray-drying step, or a freeze-drying step. Thus, a valuable having high purity can be ultimately obtained.

When concentrating a valuable, from the viewpoint of productivity, it is important to process the valuable in as short a time as possible. To achieve this, it is effective to improve the flux during concentration, i.e., liquid permeation amount per membrane area.

For example, PTL 1 describes a feed liquid concentration system comprising a first unit for obtaining a concentrated feed liquid and a diluted draw solution by bringing a feed liquid containing a solvent and a solute and a draw solution containing a draw solute into contact via a forward osmosis membrane to transfer the solvent in the feed liquid into the draw solution and to transfer the draw solute in the draw solution into the feed liquid and a second unit for obtaining a further concentrated product by subjecting the concentrated feed liquid to a freeze-drying treatment, and an example in which a solution comprising ethanol as a volatile draw solute is used as a draw solution.

### [CITATION LIST]

### [PATENT LITERATURE]

[PTL 1] WO 2020/241795

### SUMMARY

### [TECHNICAL PROBLEM]

Studies by the present inventors have found that it is difficult for conventional draw solution to achieve a suitable flux when concentrating an organic solvent-rich feed liquid. Even according to the method described in PTL 1, there is room for improvement in terms of flux in such a case.

An object of the present invention is to solve the above problem and provide a feed liquid concentration method and a feed liquid concentration system capable of achieving high flux even when an organic solvent-rich feed liquid is used.

### [SOLUTION TO PROBLEM]

The present invention encompasses the following aspects.

### [Item 1]

A feed liquid concentration method for concentrating a feed liquid, wherein
the method comprises a concentration step of bringing a feed liquid and a draw solution via a forward osmosis membrane,
the feed liquid comprises a valuable and 50% by mass or greater of an organic solvent,
the draw solution comprises a draw solute that is hydrophobic,
the forward osmosis membrane comprises a substrate layer and an active layer, and
the active layer is a hydrophilic active layer.

### [Item 2]

The feed liquid concentration method according to Item 1, wherein a dipolar interaction term of a Hansen SP value of the draw solute is 0.01 MPa^{1/2} or more and 6.40 MPa^{1/2} or less.

### [Item 3]

The feed liquid concentration method according to Item 1 or 2, wherein
the active layer comprises a benzene ring, and
a dispersion term of a Hansen SP value of the draw solute is 10.00 MPa^{1/2} or more and less than 17.00 MPa^{1/2}.

### [Item 4]

A feed liquid concentration method for concentrating a feed liquid, wherein
the method comprises a concentration step of bringing a feed liquid and a draw solution into contact via a forward osmosis membrane,
the feed liquid comprises a valuable and 50% by mass or greater of an organic solvent,
the draw solution comprises a draw solute that is hydrophilic,
the forward osmosis membrane comprises a substrate layer and an active layer, and
the active layer is a hydrophobic active layer.

### [Item 5]

The feed liquid concentration method according to Item 4, wherein a dipolar interaction term of a Hansen SP value of the draw solute is 7.10 MPa^{1/2} or more and 17.00 MPa^{1/2} or less.

### [Item 6]

The feed liquid concentration method according to any one of Items 1 to 5, wherein a boiling point of the draw solute is lower than 300 °C.

### [Item 7]

The feed liquid concentration method according to any one of Items 1 to 6, wherein the forward osmosis membrane is a hollow-fiber membrane.

### [Item 8]

The feed liquid concentration method according to any one of Items 1 to 7, wherein the substrate layer comprises at least one selected from the group consisting of polysulfone, polyethersulfone, polyvinylidene fluoride, polyacrylonitrile, polyethylene, polypropylene, cellulose-based polymer, polyketone, polyamide, polyimide, polyether ether ketone, and polybenzimidazole.

### [Item 9]

The feed liquid concentration method according to Item 8, wherein the active layer is constituted of polyamide.

### [Item 10]

The feed liquid concentration method according to any one of Items 1 to 9, wherein a molecular weight of the valuable is 100 to 3,000,000.

### [Item 11]

The feed liquid concentration method according to any one of Items 1 to 10, wherein the valuable is a pharmaceutical, a cosmetic, or a functional chemical, or a feedstock of any thereof.

### [Item 12]

The feed liquid concentration method according to any one of Items 1 to 11, wherein the feed liquid is supplied continuously and a concentrated feed liquid is delivered continuously in the concentration step.

### [Item 13]

The feed liquid concentration method according to any one of Items 1 to 12, wherein the organic solvent is at least one selected from the group consisting of tetrahydrofuran, 2-methyl tetrahydrofuran, 1,4-dioxane, methanol, ethanol, 1-propanol, 2-propanol, acetonitrile, N,N-dimethylformamide, dimethylacetamide, N-methylpyrrolidone, dimethylsulfoxide, sulfolane, chloroform, acetone, methyl butyl ketone, and pyridine.

### [Item 14]

A feed liquid concentration system for concentrating a feed liquid, wherein
the feed liquid concentration system comprises a forward osmosis membrane module configured to receive a feed liquid and a draw solution and to bring the feed liquid and the draw solution into contact via a forward osmosis membrane,
the feed liquid comprises a valuable and 50% by mass or greater of an organic solvent,
the draw solution comprises a draw solute that is hydrophobic,
the forward osmosis membrane comprises a substrate layer and an active layer, and
the active layer is a hydrophilic active layer.

### [Item 15]

The feed liquid concentration system according to Item 14, wherein a dipolar interaction term of a Hansen SP value of the draw solute is 0.01 MPa^{1/2} or more and 6.40 MPa^{1/2} or less.

### [Item 16]

The feed liquid concentration system according to Item 14 or 15, wherein
the active layer comprises a benzene ring, and
a dispersion term of a Hansen SP value of the draw solute is 10.00 MPa^{1/2} or more and less than 17.00 MPa^{1/2}.

### [Item 17]

A feed liquid concentration system for concentrating a feed liquid, wherein
the feed liquid concentration system comprises a forward osmosis membrane module configured to receive a feed liquid and a draw solution and to bring the feed liquid and the draw solution into contact via a forward osmosis membrane,
the feed liquid comprises a valuable and 50% by mass or greater of an organic solvent,
the draw solution comprises a draw solute that is hydrophilic,
the forward osmosis membrane comprises a substrate layer and an active layer, and
the active layer is a hydrophobic active layer.

### [Item 18]

The feed liquid concentration system according to Item 17, wherein a dipolar interaction term of a Hansen SP value of the draw solute is 7.10 MPa^{1/2} or more and 17.00 MPa^{1/2} or less.

### [Item 19]

The feed liquid concentration system according to any one of Items 14 to 18, wherein a boiling point of the draw solute is lower than 300 °C.

### [Item 20]

The feed liquid concentration system according to any one of Items 14 to 19, wherein the forward osmosis membrane is a hollow-fiber membrane.

### [Item 21]

The feed liquid concentration system according to any one of Items 14 to 20, wherein the substrate layer is at least one selected from the group consisting of polysulfone, polyethersulfone, polyvinylidene fluoride, polyacrylonitrile, polyethylene, polypropylene, cellulose-based polymer, polyketone, polyamide, polyimide, polyether ether ketone, and polybenzimidazole.

### [Item 22]

The feed liquid concentration system according to Item 21, wherein the active layer is constituted of polyamide.

### [Item 23]

The feed liquid concentration system according to any one of Items 14 to 22, wherein the valuable is a compound having a molecular weight of 100 to 3,000,000.

### [Item 24]

The feed liquid concentration system according to any one of Items 14 to 23, wherein the valuable is a pharmaceutical, a cosmetic, or a functional chemical, or a feedstock of any thereof.

### [Item 25]

The feed liquid concentration system according to any one of Items 14 to 24, wherein the feed liquid is supplied continuously to the forward osmosis membrane module and a concentrated feed liquid is delivered continuously from the forward osmosis membrane module.

### [Item 26]

The feed liquid concentration system according to any one of Items 14 to 25, wherein the organic solvent is at least one selected from the group consisting of tetrahydrofuran, 2-methyl tetrahydrofuran, 1,4-dioxane, methanol, ethanol, 1-propanol, 2-propanol, acetonitrile, N,N-dimethylformamide, dimethylacetamide, N-methylpyrrolidone, dimethylsulfoxide, sulfolane, chloroform, acetone, methyl butyl ketone, and pyridine.

### [ADVANTAGEOUS EFFECTS OF INVENTION]

According to one aspect of the present invention, a feed liquid concentration method and a feed liquid concentration system capable of achieving high flux even when an organic solvent-rich feed liquid is used can be provided.

### BRIEF DESCRIPTION OF DRAWINGS

FIG. 1 is a schematic diagram showing the action mechanism of solvent transfer via a forward osmosis membrane.
FIG. 2 is a schematic diagram for describing one example of a structure of a forward osmosis membrane module used in the feed liquid concentration method and feed liquid concentration system according to one aspect of the present invention.
FIG. 3 is a schematic diagram describing the feed liquid concentration system according to one aspect of the present invention.
FIG. 4 is a schematic drawing describing an apparatus used for producing the forward osmosis membrane module.

### DESCRIPTION OF EMBODIMENTS

### «Feed liquid concentration method and feed liquid concentration system»

The present inventors have experimentally clarified that when concentrating an organic solvent-rich feed liquid, a draw solution as disclosed in the prior art cannot achieve a suitable flux, although the reason therefor is not clear. In order to achieve high flux in concentration by a forward osmosis membrane, it is considered necessary to use a draw solution having a high osmotic pressure. If the osmotic pressure of the draw solution follows the theory of osmotic pressure (Van't Hoff equation), the smaller the molecular weight of the draw solute, the higher the osmotic pressure generated and the higher the flux obtained. However, studies by the present inventors discovered that when concentrating an organic solvent-rich feed liquid, various other properties contribute more to production of high flux than the molecular weight of the draw solute. The present inventors carried out further studies and discovered that by using a specific draw solute, high flux can be produced during concentration of an organic solvent-rich feed liquid, and have completed the present invention.

One aspect of the present invention provides a method for concentrating a feed liquid. In one aspect, the method comprises a concentration step of bringing a feed liquid and a draw solution into contact via a forward osmosis membrane.

One aspect of the present invention also provides a system for concentrating a feed liquid. In one aspect, the system comprises a forward osmosis membrane module configured to receive a feed liquid and a draw solution and to bring the feed liquid and the draw solution into contact via a forward osmosis membrane.

In the method or system according to one aspect of the present invention, the above feed liquid comprises a valuable and 50% by mass or greater of an organic solvent. In one aspect, the draw solution comprises a draw solute. The draw solute, in one aspect, is hydrophobic, and in one aspect, is hydrophilic. In one aspect, the draw solute has a boiling point of lower than 300 °C.

### <Feed liquid>

The feed liquid as a concentration target of the feed liquid concentration method and the feed liquid concentration system of the present embodiment comprises at least a valuable and an organic solvent, and is a solution or a dispersion liquid.

Examples of the feed liquid can include foods; pharmaceuticals; seawater; and produced water discharged from gas fields and oil fields. However, considering the advantage of the present invention that concentration is possible without the need for heating, it is effective to apply the feed liquid concentration according to the present embodiment to a feed liquid comprising a substance where decomposition due to heating is a concern, particularly a pharmaceutical, a cosmetic, or a functional chemical, or a feedstock of any thereof as a valuable, especially a feed liquid comprising a pharmaceutical or a feedstock thereof.

The temperature of the feed liquid subjected to the feed liquid concentration according to the present embodiment is preferably adjusted to the range of 1 °C or higher and 50 °C or lower.

### [Valuable]

In the present disclosure, a valuable means any tangible object that has an economic value. In one aspect, a valuable is a pharmaceutical, a cosmetic, or a functional chemical, or a feedstock of any thereof.

Examples of the pharmaceutical or feedstock thereof include amino acids, peptides, proteins, saccharides, vaccines, nucleic acids, antibiotics, antibody-drug conjugates (ADCs), yeasts, and vitamins.

An amino acid is a compound having one amino acid skeleton composed of a carboxyl group, an amino group, and a moiety linking these groups. The amino acid in the present disclosure is a concept that encompasses essential amino acids, non-essential amino acids, and unnatural amino acids.

Examples of essential amino acids include tryptophan, lysine, methionine, phenylalanine, threonine, valine, leucine, and isoleucine. Examples of non-essential amino acids include arginine, glycine, alanine, serine, tyrosine, cysteine, asparagine, glutamine, proline, aspartic acid, and glutamic acid.

Unnatural amino acids are artificial compounds which do not exist in nature, and refer to compounds having one amino acid skeleton within a molecule. Examples of unnatural amino acids as pharmaceutical feedstocks in the present disclosure include labeled amino acids and functionalized amino acids.

Labeled amino acids are compounds each having a desired labeling compound bonded to an amino acid skeleton. Examples of labeling compounds include dyes, fluorescent substances, luminescent substances, enzyme substrates, coenzymes, antigenic substances, and protein-binding substances.

Examples of functionalized amino acids include photo-responsive amino acids, photo-switch amino acids, fluorescent probe amino acids, and fluorescent-labeled amino acids.

A peptide refers to a compound in which 2 or more and less than 70 amino acid residues are linked together, and may be chain-like or ring-like. Examples of peptides in the present disclosure include L-alanyl-L-glutamine, β-alanyl-L-histidine cyclosporine, and glutathione.

Of compounds containing amino acid residues linked together, proteins generally refer to compounds having longer chains than peptides. Examples of proteins in the present disclosure include interferon α, interferon β, interleukins 1 to 12, growth hormone, erythropoietin, insulin, granular colony stimulating factor (G-CSF), tissue plasminogen activator (TPA), natriuretic peptide, blood coagulation factor VIII, somatomedin, glucagon, growth hormone releasing factor, serum albumin, calcitonin, and Lipase G Amano 50.

Examples of saccharides include monosaccharides, disaccharides, saccharide chains (excluding disaccharides), and saccharide chain derivatives.

Examples of monosaccharides include glucose, fructose, galactose, mannose, ribose, and deoxyribose. Examples of disaccharides include maltose, sucrose, and lactose.

A saccharide chain in the present disclosure is a concept excluding disaccharides, and examples thereof include cellulose, glycosaminoglycan, starch, sacran, dextran, dextrin, inulin, curdlan, fucoidan, fructan, pullulan, pectin, polydextrose, maltodextrin, lignin, xylan, mannan, glucomannan, glucuronoxylan, and xylose. Examples of saccharide chain derivatives include saccharide derivatives such as N-acetylglucosamine, N-acetylgalactosamine, and N-acetylneuraminic acid.

Examples of vaccines include hepatitis A vaccine, hepatitis B vaccine, and hepatitis C vaccine;
examples of nucleic acids include oligonucleotides, RNAs, aptamers, and decoys;
examples of antibiotics include streptomycin and vancomycin;
examples of antibody-drug conjugates (ADCs) include brentuximab vedotin (Adcetris), trastuzumab emtansine (Kadcyla), and gemtuzumab ozogamicin (Mylotarg).

Examples of yeasts include *Saccharomyces cerevisiae, Pichia stipitis, Candida shehatae,* and *Pachysolen tannophilus,* and also include mutants thereof.

Examples of vitamins include vitamin A, vitamin B, and vitamin C, and also include derivatives and salts thereof. Vitamin B, for example, encompasses vitamin B6 and vitamin B12.

In one aspect, the cosmetic or feedstock thereof of the present disclosure is a compound described on the list of quasi-drug excipients (more specifically, regarding a partial revision of PSEHB/PED Notification No. 0325-7 "Regarding list of quasi-drug excipients" dated March 25, 2021) issued by the Ministry of Health, Labor and Welfare or a modified compound thereof, and examples thereof include paraffin, sodium benzoate, oleic acid, and hydrolyzed collagen.

The functional chemical or feedstock thereof of the present disclosure refers to various chemical species or modified products, precursors, and feedstocks thereof. Examples of the functional chemical or feedstock thereof include chemical species such as metal nanoparticle, semiconductor nanoparticle, metal colloid, nanodiamond, porous nanoclay, metal-organic framework (MOF), carbon nanotube, fullerene, graphene, graphene oxide, carbon nanohorn, and cellulose nanofiber; and modified products, precursors, and feedstocks thereof.

The molecular weight of the valuable is preferably 100 to 3,000,000, 100 to 500,000, 100 to 50,000, or 100 to 30,000. The above molecular weight is the number average molecular weight in terms of polyethylene oxide as measured by gel permeation chromatography when the valuable is a polymer, and refers to a value based on atomic weight when the valuable is not a polymer.

### [Organic solvent]

The feed liquid, in one aspect, comprises an organic solvent. In the present disclosure, a solvent is a compound that can dissolve or disperse a valuable and, if present, an accessory component. In the present disclosure, an organic solvent is an organic compound having one or more carbon atoms, and in one aspect, is a compound that exists as a liquid at -10 °C or higher and lower than 50 °C under normal pressure. When the active layer of the forward osmosis membrane used is hydrophilic, in one aspect, the organic solvent comprises a hydrophilic organic solvent, or is a hydrophilic organic solvent. When a hydrophilic organic solvent is contained in the feed liquid, the active layer of the forward osmosis membrane used is advantageously hydrophilic since high flux is easily achieved. In the present disclosure, a hydrophilic organic solvent means an organic solvent in which a one-phase state is maintained when a sample containing the solvent and water introduced each at 50 mL is stirred at 25 °C for 24 h using a φ 8 mm × 25 mm stirrer chip and a magnetic stirrer.

Examples of organic solvents include alcohols, esters, ethers, aprotic polar compounds, aromatic compounds, aliphatic compounds, chlorinated hydrocarbons, ketones, and aldehydes.

Specific examples of hydrophilic organic solvents include:
alcohols, for example, methanol, ethanol, 1-propanol, 2-propanol, normal butanol, sec-butanol, t-butanol, and hexafluoroisopropyl alcohol;
ethers, for example, tetrahydrofuran, 2-methyl tetrahydrofuran, 1,4-dioxane, diethylene glycol dimethyl ether, and 1,2-dimethoxyethane;
aprotic polar compounds, for example, acetonitrile, N,N-dimethylformamide, dimethylacetamide, N-methylpyrrolidone, dimethylsulfoxide, nitromethane, and sulfolane;
aromatic compounds, for example, pyridine;
ketones, for example, acetone and methyl ethyl ketone; and
aldehydes, for example, formaldehyde, acetaldehyde, propionaldehyde, butanal, acrolein, benzaldehyde, furfural, and vanillin.

The organic solvent may be one solvent or a combination of two or more solvents, and is preferably at least one selected from the group consisting of tetrahydrofuran, 2-methyl tetrahydrofuran, 1,4-dioxane, methanol, ethanol, 1-propanol, 2-propanol, acetonitrile, N,N-dimethylformamide, dimethylacetamide, N-methylpyrrolidone, dimethylsulfoxide, sulfolane, chloroform, acetone, methyl ethyl ketone, and pyridine. Examples of the combination of two or more organic solvents include a combination of tetrahydrofuran (THF) and methanol and a combination of tetrahydrofuran (THF) and ethanol, and for example, may be a combination of tetrahydrofuran (THF) and methanol at a mass ratio of 1:1.

The feed liquid may comprise a solvent that is not an organic solvent.

The feed liquid may comprise one or more organic solvents and water, and for example, may be a combination of an organic solvent (in the case of two or more, the total thereof) and water at a mass ratio of 99:1 to 90:10, 90:10 to 80:20, 80:20 to 70:30, or 51:49. More typical examples include a combination of tetrahydrofuran (THF) and water at a mass ratio of 51:49.

When the active layer of the forward osmosis membrane used is hydrophobic, in one aspect, the organic solvent comprises a hydrophobic organic solvent or is a hydrophobic organic solvent. When a hydrophobic organic solvent is contained in the feed liquid, the active layer of the forward osmosis membrane used is advantageously hydrophobic since high flux is easily achieved. In the present disclosure, a hydrophobic organic solvent means an organic solvent in which a two-phase state is maintained when a sample containing the solvent and water introduced each at 50 mL is stirred at 25 °C for 24 h using a φ 8 mm × 25 mm stirrer chip and a magnetic stirrer.

Examples of organic solvents having hydrophobicity include
alcohols such as pentanol, hexanol, and heptanol;
carboxylic acids such as oleic acid, stearic acid, linoleic acid, and palmitic acid;
aromatic hydrocarbons such as toluene, xylene, ethylbenzene, cumene, isopropylbenzene, and triisopropylbenzene;
aliphatic hydrocarbons such as normal hexane, normal heptane, isooctane, cyclohexane, methylcyclohexane, and decahydronaphthalene;
ethers such as dimethyl ether, diethyl ether, diisopropyl ether, methyl tert-butyl ether, and methyl cyclopentyl ether; and
esters such as methyl formate, ethyl formate, methyl acetate, ethyl acetate, isopropyl acetate, n-butyl acetate, and t-butyl acetate.

The concentration of the organic solvent in the feed liquid is 50% by mass or greater in one aspect, and is preferably 60% by mass or greater, 70% by mass or greater, 80% by mass or greater, or 90% by mass or greater. The above concentration, for example, may be 99.9% by mass or less, 99% by mass or less, or 98% by mass or less.

### [Yield of valuable]

The feed liquid concentration according to the present embodiment can achieve the yield of the valuable of, for example, 70% or greater, 80% or greater, 90% or greater, 95% or greater, or 99% or greater. The yield of the valuable is ideally 100%, but from the viewpoint of practical process efficiency, may be 99.99% or less or 99.9% or less in one aspect. In the present disclosure, the yield of a valuable refers to a value obtained by dividing the total mass of the valuable obtained in the feed liquid concentration according to the present embodiment by the total mass of the valuable subjected to feed liquid concentration (specifically, supplied to the forward osmosis membrane module), expressed as a percentage. The above yield can be determined by mass measurement and component analysis of the valuable before and after concentration. The method of component analysis is selected from known methods depending on the type of the valuable, and in one aspect, is selected from ICP-MS (inductively coupled plasma - mass spectroscopy), nuclear magnetic resonance (NMR), gas chromatography mass spectrometry (GC/MS), colorimetry, fluorometry, and high performance liquid chromatography (HPLC).

### <Draw solution>

### [Draw solute]

The draw solution used in the method of the present embodiment comprises a draw solute. The boiling point of the draw solute, from the viewpoint of efficiently removing the draw solute in a step subsequent to the concentration step, for example, a drying step, a distillation step, a spray-drying step, or a freeze-drying step and ultimately obtaining a valuable having high purity, is preferably lower than 300 °C, 290 °C or lower, 280 °C or lower, 270 °C or lower, 260 °C or lower, 250 °C or lower, 240 °C or lower, 230 °C or lower, 220 °C or lower, 210 °C or lower, 200 °C or lower, 190 °C or lower, 180 °C or lower, 170 °C or lower, 160 °C or lower, 150 °C or lower, 140 °C or lower, 130 °C or lower, 120 °C or lower, 110 °C or lower, 100 °C or lower, 90 °C or lower, 80 °C or lower, 70 °C or lower, or 60 °C or lower. The above boiling point, from the viewpoint of handleability of the draw solute, is preferably -10 °C or higher, -5 °C or higher, or 0 °C or higher. A boiling point is a value based on JIS K 2254, but for a substance having a boiling point indicated in a SDS (Safety Data Sheet), the boiling point described in the SDS may be regarded as the boiling point of the substance.

In one aspect, the draw solute is hydrophobic when the active layer of the forward osmosis membrane used is hydrophilic. In the present disclosure, a draw solute that is hydrophobic means that a two-phase state is maintained when the draw solute and water are mixed at a volume ratio of 50:50 and stirred at 25 °C for 24 h using a φ 8 mm × 25 mm stirrer chip and a magnetic stirrer.

The dipolar interaction term of the Hansen SP value (also referred to simply as SP value in the present disclosure) of the draw solute is preferably 0.01 MPa^{1/2} or more or 0.02 MPa^{1/2} or more, and is preferably 6.40 MPa^{1/2} or less, 6.00 MPa^{1/2} or less, or 4.00 MPa^{1/2} or less. Without being bound by any theory, a draw solute having a large dipolar interaction term has high affinity with an active layer having hydrophilicity, and it is therefore considered that a large amount of draw solute permeates to the feed liquid side. Thus, it is presumed that the concentration difference of the draw solute near the active layer decreases, and therefore the osmotic pressure difference for concentrating the feed liquid decreases, resulting in low flux. Therefore, for membranes comprising an active layer having hydrophilicity, a draw solute having a low dipolar interaction term is desirable for achieving high flux due to low affinity with the membrane. However, in a draw solute having a sufficiently small dipolar interaction term of 4.00 MPa^{1/2} or less, it is presumed that the dispersion term described below contributes more to high flux than the size of the dipolar interaction term.

The dispersion term (in one aspect, the dispersion term when the active layer of the forward osmosis membrane used comprises a benzene ring) of the SP value of the draw solute is preferably 10.00 MPa^{1/2} or more, 11.00 MPa^{1/2} or more, or 12.00 MPa^{1/2} or more, and is preferably less than 17.00 MPa^{1/2}, less than 16.00 MPa^{1/2}, and less than 15.00 MPa^{1/2}. The dispersion term of the Hansen SP value of a certain molecule is a parameter indicating the degree to which van der Waals forces contribute to the Hansen SP value of the molecule. Without being bound by any theory, a large dispersion term strongly correlates with abundance of π electrons. Therefore, similar to the explanation stated above regarding the dipolar interaction term, when the active layer comprises a benzene ring (i.e., a structure comprising π electrons), the draw solute has high affinity with the active layer, and it is therefore considered that a large amount of draw solute permeates to the feed liquid side. In this case, it is presumed that the concentration difference of the draw solute near the active layer decreases, whereby the osmotic pressure difference for concentrating the feed liquid decreases, resulting in low flux. Therefore, a draw solute having low affinity with the membrane (in one aspect, a draw solute having a small dispersion term) is desirable for achieving high flux.

The dipolar interaction term and the dispersion term of the Hansen SP value are values obtained using the Hansen SP & QSPR Model, an add-on for the commercially available software Winmostar 9.4.11. The above values, when the draw solute is a combination of two or more materials, are each an average of the values of the draw solutes considering the volume fractions thereof in the draw solution.

Examples of the draw solute, when the active layer of the forward osmosis membrane used is hydrophilic, include organic solvents having hydrophobicity.

Examples of organic solvents having hydrophobicity include
alcohols such as pentanol, hexanol, and heptanol;
carboxylic acids such as oleic acid, stearic acid, linoleic acid, and palmitic acid;
aromatic hydrocarbons such as toluene, xylene, ethylbenzene, cumene, isopropylbenzene, and triisopropylbenzene;
aliphatic hydrocarbons such as normal hexane, normal heptane, isooctane, cyclohexane, methylcyclohexane, and decahydronaphthalene;
ethers such as dimethyl ether, diethyl ether, diisopropyl ether, methyl tert-butyl ether, and methyl cyclopentyl ether; and
esters such as methyl formate, ethyl formate, methyl acetate, ethyl acetate, isopropyl acetate, n-butyl acetate, and t-butyl acetate.

The draw solute may be one solvent or a combination of two or more solvents. The draw solute is preferably at least one selected from the group consisting of ethyl acetate, toluene, methyl tert-butyl ether, triisopropylbenzene, cyclohexane, methylcyclohexane, normal hexane, normal heptane, isooctane, and decahydronaphthalene. Examples of the combination of two or more solvents include a combination of methylcyclohexane and normal hexane and a combination of methylcyclohexane and isooctane, and for example, may be a combination of methylcyclohexane and normal hexane at a mass ratio of 1:1.

In one aspect, the draw solute is hydrophilic when the active layer of the forward osmosis membrane used is hydrophobic. In the present disclosure, a draw solute that is hydrophilic means that a one-phase state is maintained when the draw solute and water are mixed at a volume ratio of 50:50 and stirred at 25 °C for 24 h using a φ 8 mm × 25 mm stirrer chip and a magnetic stirrer.

When the active layer of the forward osmosis membrane used is hydrophobic, the dipolar interaction term of the Hansen SP value (also referred to simply as SP value in the present disclosure) of the draw solute is preferably 4.80 MPa^{1/2} or more, 5.40 MPa^{1/2} or more, 6.00 MPa^{1/2} or more, 7.00 MPa^{1/2} or more, or 7.10 MPa^{1/2} or more, and is preferably 22.00 MPa^{1/2} or less, 21.00 MPa^{1/2} or less, 20.00 MPa^{1/2} or less, 19.00 MPa^{1/2} or less, 18.00 MPa^{1/2} or less, or 17.00 MPa^{1/2} or less. Without being bound by any theory, a draw solute having a small dipolar interaction term has high affinity with an active layer having hydrophobicity, and it is therefore considered that a large amount of draw solute permeates to the feed liquid side. Thus, it is presumed that the concentration difference of the draw solute near the active layer decreases, and therefore the osmotic pressure difference for concentrating the feed liquid decreases, resulting in low flux. Therefore, a draw solute having low affinity with the membrane and a large dipolar interaction term is desirable for achieving high flux.

Examples of the draw solute, when the active layer of the forward osmosis membrane used is hydrophobic, include organic solvents having hydrophilicity.

Examples of organic solvents having hydrophilicity include
alcohols such as methanol (dipolar interaction term of Hansen SP value (hereinafter, the same applies to value within parentheses): 12.31), ethanol (9.3), 1-propanol (7.34), isopropanol (7.18), and tertiary butanol (5.5);
carboxylic acids such as formic acid (8.55), acetic acid (6.58), and propionic acid (5.91); and
others such as tetrahydrofuran (4.88), acetone (9.1), N-methylpyrrolidone (9.94), dimethylformamide (13.89), dimethylsulfoxide (14.62), and acetonitrile (16.64).

The draw solute may be one solvent or a combination of two or more solvents. The draw solute is preferably at least one selected from the group consisting of isopropanol, tetrahydrofuran, acetone, N-methylpyrrolidone, dimethylformamide, dimethylsulfoxide, and acetonitrile. Examples of the combination of two or more solvents include a combination of tetrahydrofuran and isopropanol and a combination of isopropanol and dimethylsulfoxide, and for example, may be a combination of tetrahydrofuran and isopropanol at a mass ratio of 1:1.

The concentration of the draw solute in the draw solution may be appropriately set in accordance with the composition of the feed liquid and the type of the draw solute in the draw solution so as to generate an osmotic pressure that ensures transfer of an organic solvent from the feed liquid to the draw solution and can generate a driving force in a range where the composition of the feed liquid near the forward osmosis membrane does not change rapidly, but a higher concentration is generally desirable. The concentration is preferably 10% by mass or greater, 20% by mass or greater, or 30% by mass or greater, and is 100% by mass in a preferable aspect and may be 90% by mass or less or 80% by mass or less in one aspect. The draw solution may comprise a solvent, particularly an organic solvent, and especially a hydrophilic organic solvent, in addition to any of the draw solutes exemplified above. The same hydrophilic organic solvents exemplified above as ones in the feed liquid can be exemplified as the hydrophilic organic solvent, and for example, one or more selected from tetrahydrofuran, 2-methyl tetrahydrofuran, and ethanol may be used. In a preferable aspect, at least one of the organic solvents, preferably hydrophilic organic solvents, in the feed liquid and at least one of the solvents in the draw solution are the same solvent.

### <Forward osmosis membrane and forward osmosis membrane module>

The forward osmosis membrane and forward osmosis membrane module that can be applied to the feed liquid concentration method or feed liquid concentration system of the present embodiment will be described.

### [Forward osmosis membrane]

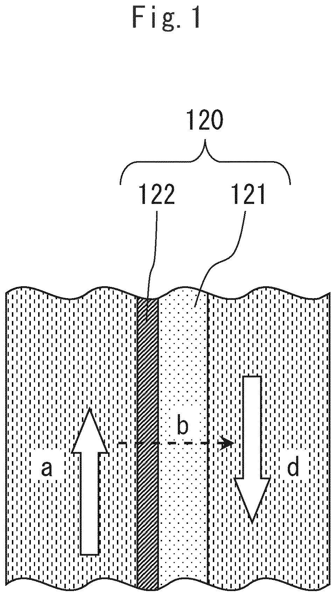

FIG. 1 is a schematic diagram showing the action mechanism of solvent transfer via a forward osmosis membrane. Referring to FIG. 1, a feed liquid (a) flows on one side of a forward osmosis membrane (120), a draw solution (d) having an osmotic pressure higher than the feed liquid (a) flows on the opposite side, and the two liquids are brought into contact via the forward osmosis membrane (120). At this time, an osmotic pressure difference between the feed liquid (a) and the draw solution (d) acts as a driving force, and a solvent (b) in the feed liquid (a) passes through the forward osmosis membrane (120) and transfers into the draw solution (d).

Referring to FIG. 1, the forward osmosis membrane (120) comprises a substrate layer (121) and an active layer (122) formed on one surface of the substrate layer (121). The active layer (122) has a very dense structure through which small molecules can permeate but a valuable cannot, and is formed on the side of the substrate layer (121) in contact with the feed liquid (a).

In forward osmosis, the driving force that transfers the solvent (b) from the feed liquid (a) to the draw solution (d) is the osmotic pressure difference between the feed liquid (a) and the draw solution (d). Thus, liquid renewal at the interface between the active layer (122) of the forward osmosis membrane (120) and the feed liquid (a) and the interface between the substrate layer (121) of the forward osmosis membrane (120) and the draw solution (d) is necessary. Therefore, it is necessary that the feed liquid (a) and the draw solution (d) flow at appropriate flow speeds on both sides of the forward osmosis membrane (120).

In FIG. 1, the feed liquid (a) and the draw solution (d) are flowed so that the two liquids are in countercurrent flow. However, the two liquids may be in parallel flow.

### (Substrate layer)

A porous membrane is generally used as a material of the substrate layer (121). In the forward osmosis membrane (120), the draw solution (d) permeates into a portion of the substrate layer (121) constituted of a porous membrane, and the feed liquid (a) and the draw solution (d) are brought into contact via the active layer (122). In this case, the solvent in the feed liquid (a) transfers to the side of the draw solution (d) having a higher osmotic pressure, resulting in concentration.

The form of the forward osmosis membrane may be of any structure, for example, hollow-fiber membrane-like, tubular, or flat membrane-like. A hollow-fiber membrane can form flow paths for a feed liquid and a draw solution to pass without using a spacer and can carry out uniform concentration, and is thus preferable.

The material of the porous membrane constituting the substrate layer can be appropriately selected from known materials. However, it is appropriate that the material does not dissolve or swell in the organic solvent contained in the feed liquid and thus can maintain the pore shapes of the membrane.

Examples of the material of the porous membrane constituting the substrate layer specifically include polysulfone, polyethersulfone, polyvinylidene fluoride, polyacrylonitrile, polyethylene, polypropylene, cellulose-based polymer, polyketone, polyamide, polyimide, polyether ether ketone, and polybenzimidazole, and it is preferable that at least one selected from these be included or at least one selected from these be the main component (i.e., the component present in the largest amount). The above polymer also encompasses crosslinked products. The material of the porous membrane constituting the forward osmosis membrane (particularly a hollow-fiber membrane), from the viewpoint of solvent resistance, is preferably a material comprising at least one selected from polysulfone, polyethersulfone, polyketone, polyamide, and polyimide, or one selected from these as the main component. Among these, polyketone is particularly preferable.

### (Active layer)

In the method and system of the present embodiment, whether the draw solute suitable for the present method is hydrophilic or hydrophobic depends on whether the active layer is hydrophilic or hydrophobic. In the present disclosure, the active layer has hydrophilicity when the contact angle of water on the active layer surface where the active layer is not in contact with the substrate is less than 90°, and the active layer has hydrophobicity when the contact angle is 90° or greater.

As the material of the active layer, polyamide is advantageous due to high permeability and high solvent resistance for a feed liquid comprising an organic solvent having hydrophilicity. An active layer constituted of polyamide can be formed by carrying out interfacial polymerization of a polyfunctional acid halide and/or a polyfunctional amine on the substrate layer.

A polyfunctional acid halide is an acid halide compound comprising two or more acid halide groups in one molecule. Specifically, for example,
halide compounds of fatty acids such as oxalic acid, malonic acid, maleic acid, fumaric acid, glutaric acid, 1,3,5-cyclohexanetricarboxylic acid, 1,3-cyclohexanedicarboxylic acid, and 1,4-cyclohexanedicarboxylic acid; and
acid halide compounds of aromatic acids such as phthalic acid, isophthalic acid, 1,3,5-benzenetricarboxylic acid, 1,2,4-benzenetricarboxylic acid, 1,3-benzenedicarboxylic acid, and 1,4-benzenedicarboxylic acid
can be used. These acid halide compounds can be used alone or in combinations of two or more.

In the present embodiment, from viewpoints such as economy, ease of procurement, ease of handling, and ease of reaction, particularly, trimesic acid chloride alone, a mixture of trimesic acid chloride and isophthalic acid chloride, or a mixture of trimesic acid chloride and terephthalic acid chloride is preferably used.

A polyfunctional amine is an amine compound comprising two or more amino groups in one molecule, and can include aromatic amino compounds and aliphatic amino compounds.

Examples of aromatic amino compounds can specifically include m-phenylenediamine, p-phenylenediamine, 3,3'-diaminodiphenylmethane, 4,4'-diaminodiphenylamine, 4,4'-diaminodiphenylether, 3,4'-diaminodiphenylether, 3,3'-diaminodiphenylamine, 3,5-diaminobenzoic acid, 4,4'-diaminodiphenylsulfone, 3,3'-diaminodiphenylsulfone, 3,4'-diaminodiphenylsulfone, 1,3,5-triaminobenzene, and 1,5-diaminonaphthalene. These can be used alone or in mixtures thereof.

From viewpoints such as economy, ease of procurement, ease of handling, and ease of reaction, particularly one or more selected from m-phenylenediamine and p-phenylenediamine are suitably used as the aromatic amino compound in the present embodiment.

Examples of aliphatic amino compounds can specifically include piperazine, 2,5-dimethylpiperazine, 2-methylpiperazine, 2,6-dimethylpiperazine, 2,3,5-trimethylpiperazine, 2-ethylpiperazine, 2,5-diethylpiperazine, 2,3,5-triethylpiperazine, 2-n-propylpiperazine, 2,5-di-n-butylpiperazine, ethylenediamine, and bispiperidylpropane. These can be used alone or in mixtures thereof.

Interfacial polymerization of a polyfunctional acid halide and a polyfunctional amine can be carried out according to a conventional method.

As the material of the active layer, for a feed liquid comprising an organic solvent having hydrophobicity, a silicone-based polymer is advantageous due to high permeability and high solvent resistance. Examples of the silicone-based polymer include polydimethylsiloxane, polydiethylsiloxane, polydi-iso-propylsiloxane, and polydiphenylsiloxane.

The obtained active layer may be appropriately subjected to a heat treatment. The heat treatment may be carried out with hot water or with high-temperature high-pressure steam in a pressure vessel such as an autoclave. By subjecting the active layer to a heat treatment, a reduction in back-diffusion of the draw solute can be expected, although the reason therefor is not clear.

### (Aspect of hollow-fiber membrane)

When the forward osmosis membrane is a hollow-fiber membrane, the outer diameter of the hollow-fiber membrane, for example, is 300 µm or more and 5,000 µm or less and preferably 350 µm or more and 4,000 µm or less, and the inner diameter of the hollow-fiber membrane, for example, is 200 µm or more and 4,000 µm or less and preferably 250 µm or more and 1,500 µm or less. It is preferable that the inner diameter of a hollow-fiber membrane be 200 µm or more, so that high back-pressure does not easily occur when a liquid flows through a hollow fiber inside space. When the inner diameter of a hollow-fiber membrane is 4,000 µm or less, and when a plurality of forward osmosis membranes are modularized for use, membrane area per module is not excessively small, and thus effective concentration is possible.

### [Forward osmosis membrane module]

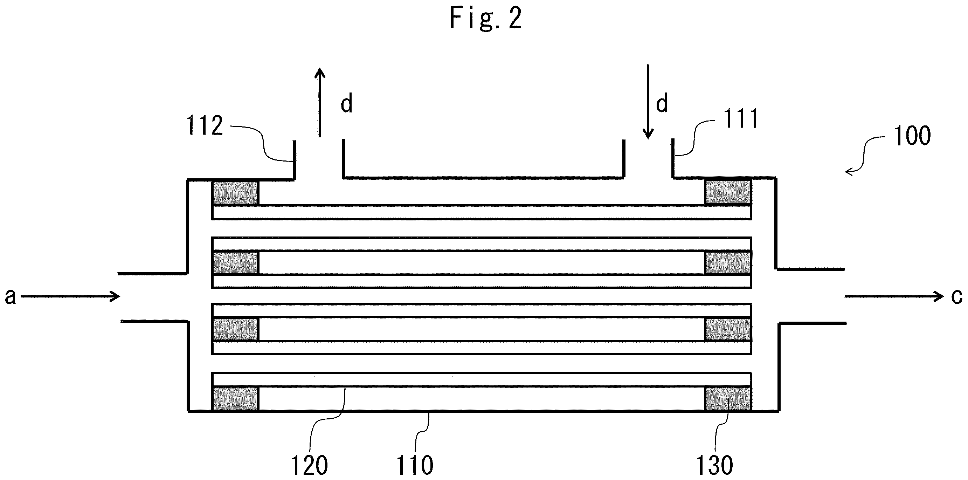

FIG. 2 is a schematic diagram for describing one example of a structure of a forward osmosis membrane module used in the feed liquid concentration method and feed liquid concentration system according to one aspect of the present invention. In the forward osmosis membrane module (100) of FIG. 2, a plurality of hollow-fiber forward osmosis membranes (120) are housed within a housing (110). Both ends of the forward osmosis membranes (120) are adhesively fixed to the housing (110) with an adhesive resin (130). There are two housing side tubes on the side surface of the housing (110). One of the housing side tubes is a draw solution inlet (111) and the other is a draw solution outlet (112).

The housing (110) interior is divided by the outer walls of the forward osmosis membranes (120) and the adhesive resin (130) into two portions, a space where the feed liquid (a) flows and a space where the draw solution (d) flows. Except that the solvent can travel back and forth via the inner walls of the forward osmosis membranes (120), both spaces are fluidly isolated.

When a feed liquid (a) is introduced from one end of the forward osmosis membrane module (100), the feed liquid (a) flows to the insides of the hollow-fiber forward osmosis membranes (120), and a concentrated feed liquid (c) flows out from the other end surface. Similarly, when a draw solution (d) flows from the draw solution inlet (111) of the side tubes of the housing (110), the draw solution (d) flows to the outside spaces of the hollow-fiber forward osmosis membranes (120) and flows out from the draw solution outlet (112). The feed liquid (a) and the draw solution (d) can thereby be brought into contact via the forward osmosis membranes (120). At this time, substances other than the valuable transfer from the feed liquid (a) to the draw solution (d) due to a difference in osmotic pressure between the two solutions. In the forward osmosis membrane method, concentration is carried out by such a mechanism.

When the forward osmosis membranes (120) each comprise a substrate layer and an active layer formed on one side of the substrate layer, as described above, the active layer is formed on the side of the substrate layer that is in contact with the feed liquid. Therefore, it is preferable that the forward osmosis membrane module (100) of FIG. 2, where the feed liquid (a) flows to the insides of the hollow-fiber forward osmosis membranes, comprise an active layer on the inside of each hollow-fiber substrate layer. When the flow rate of the feed liquid (a) and/or the flow rate of the draw solution (d) is large, the effect of osmotic pressure difference on both sides of the forward osmosis membranes (120), particularly the active layer, increases. Thus, the amount of solvent permeated per membrane area of the forward osmosis membranes increases. In the forward osmosis membrane module (100) of FIG. 2, the feed liquid (a) and the draw solution (d) are flowed so that the two liquids are in countercurrent flow. However, the two liquids may be in parallel flow.

The material of the housing (110) of the forward osmosis membrane module (100) of FIG. 2 is selected from the viewpoints of chemical resistance, pressure resistance, heat resistance, impact resistance, and weather resistance so that various performances are not degraded by the components contained in the feed liquid (a) and the draw solution (d). As the material of the housing (110), for example, a resin or a metal can be used. From the above viewpoints, the material is preferably selected from resins such as polypropylene, polysulfone, polyethersulfone, polyvinylidene fluoride, polytetrafluoroethylene, perfluoroalkoxyalkane, ABS resin, fiber-reinforced plastic, and vinyl chloride resin; and from metals such as stainless steel, brass, and titanium.

It is desirable that the adhesive resin (130) in the forward osmosis membrane module (100) of FIG. 2 have satisfactory mechanical strength. Examples of resins that can be used as the adhesive resin (130) include thermosetting epoxy resins, thermosetting urethane resins, ceramic-type resins, and sealing materials obtained by melting polyethylene and low-melting-point metals. From the viewpoint of heat resistance, epoxy resins are preferable, and from the viewpoint of handleability, urethane resins are preferable.

The method of adhesively fixing the forward osmosis membrane (120) to the housing (110) needs only to follow known adhesion methods relating to hollow-fiber membrane module production.

### [Flux]

In the feed liquid concentration of the present embodiment, flux is preferably 5 kg/m²/hr or more, 10 kg/m²/hr or more, 15 kg/m²/hr or more, 20 kg/m²/hr or more, 25 kg/m²/hr or more, 30 kg/m²/hr or more, 35 kg/m²/hr or more, or 40 kg/m²/hr or more, and is preferably 300 kg/m²/hr or less, 250 kg/m²/hr or less, or 200 kg/m²/hr or less.

### <Configuration of feed liquid concentration system>

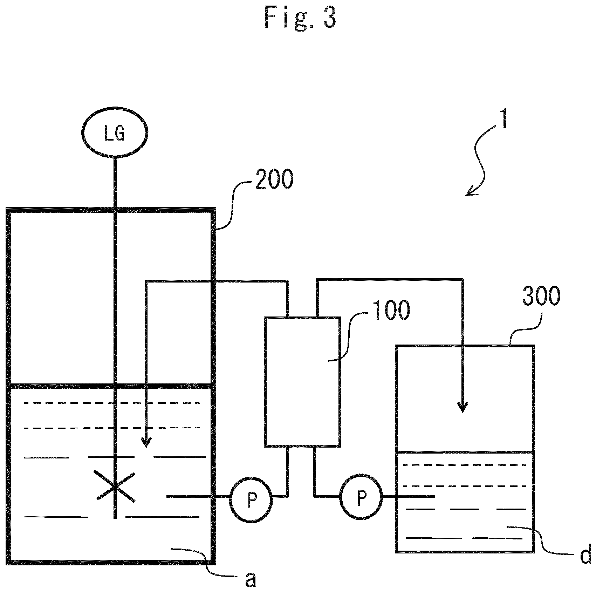

FIG. 3 is a schematic diagram describing the feed liquid concentration system according to one aspect of the present invention. Referring to FIG. 3, a feed liquid concentration system (1) comprises a forward osmosis membrane module (100), a feed liquid tank (200), and a draw solution tank (300), and further comprises a pipe for feeding a feed liquid (a) from the feed liquid tank (200) to the forward osmosis membrane module (100) and a pipe for feeding a draw solution (d) from the draw solution tank (300) to the forward osmosis membrane module (100). Specifically, the forward osmosis membrane module (100) is configured to receive a feed liquid (a) and a draw solution (d) and to bring the feed liquid (a) and the draw solution (d) into contact via a forward osmosis membrane.

In the feed liquid concentration system (1), the feed liquid (a) is fed at a suitable flow rate to one of the spaces (for example, inside spaces of the hollow-fiber-like membranes) of the forward osmosis membrane module (100) by a pump (P) from a lower portion of the feed liquid tank (200) filled with the feed liquid (a). At this time, the flow rate of the feed liquid (a) is adjusted manually or automatically by a flow meter (not shown). The draw solution (d) is supplied to the other space (for example, outside spaces of the hollow-fiber-like membranes) of the forward osmosis membrane module (100) by a pump (P) from the draw solution tank (300) filled with the draw solution (d). Due to the difference in osmotic pressure between the feed liquid (a) and the draw solution (d), the solvent transfers from the feed liquid (a) to the draw solution (d) side, and the feed liquid (a) is concentrated. The concentrated feed liquid (a) exits the forward osmosis membrane module (100) and returns to the feed liquid tank (200). The volume of the draw solution (d) is increased by mixing with the solvent from the feed liquid (a). Thus, measures such as sufficiently increasing the capacity of the draw solution tank (300) or discharging a portion out of the draw solution tank (300) by overflowing are necessary. FIG. 3 does not illustrate an apparatus for discharging the draw solution (d) out of the draw solution tank (300). Providing the inside of the feed liquid tank (200) with a stirring apparatus is also effective for carrying out stable concentration.

From the viewpoint of improving flux of the feed liquid concentration, the feed liquid is preferably supplied continuously to the forward osmosis membrane module (100), and the concentrated feed liquid is preferably delivered continuously from the forward osmosis membrane module (100). Such continuous supply and delivery can be achieved by suitably controlling the pumps (P) described above.

The concentrated feed liquid (a) exits from the forward osmosis membrane module (100) and returns to the feed liquid tank (200) for circulation. The return position is preferably a position far from a collection position of the feed liquid (a) for supplying to the forward osmosis membrane module (100) and set at a bottom portion of the feed liquid tank (200). Returning the feed liquid (a) at a position far from the collection position can suppress an excessive increase in the concentration of the organic solvent in the solution due to a short path. In addition, returning the feed liquid (a) at a bottom portion of the feed liquid tank (200) can prevent the valuable in the solution from precipitating on the walls of the feed liquid tank (200) and making recovery difficult.

In the feed liquid concentration system (1), the specific gravity of the feed liquid (a) can be tracked by a hydrometer (not shown). The concentration of the organic solvent in the feed liquid (a) can thereby be monitored. By changing the operating conditions of the forward osmosis membrane module as needed, concentrating while adjusting the composition of the feed liquid (a) within a range where the valuable is not precipitated, aggregated, or denatured is possible.

The degree of concentration of the feed liquid (a) can be found by measuring the volume of the feed liquid (a) using a liquid level gauge (LG). Concentration can be completed when the target concentration rate is finally reached.

As items for monitoring the characteristics (for example, concentration of at least one of the components in the feed liquid) of the feed liquid (a), pH measurement, conductivity measurement, optical rotation measurement, refractive index measurement, ultraviolet light analysis, visible light analysis, infrared light analysis, and near-infrared light analysis can be used, in addition to the exemplified specific gravity measurement. Using one or more measurement results selected from these analyses, for example, the concentration of at least one of the components in the feed liquid can be determined. These results can be monitored with measured values of the liquid level gauge and the weight of the liquid simultaneously and the operating conditions of the forward osmosis membrane module can be changed as needed to carry out concentration while maintaining the concentration of the organic solvent in the feed liquid (a).

Using an estimation model obtained from any of known AI techniques such as regression analysis, classification, clustering, and deep learning that utilizes a neural network, or a combination thereof to estimate the concentration of a water-soluble organic solvent in the feed liquid (a) is more preferable, since the concentration can be estimated with higher accuracy. By monitoring the concentration of the water-soluble organic solvent in the feed liquid (a) with high accuracy by such a method and manipulating the appropriate operating conditions, concentration can be carried out while maintaining the concentration of the water-soluble organic solvent in a suitable range with higher accuracy. In this case, the risk of precipitation, aggregation, or denaturation of the valuable can be preferably further reduced.

### EXAMPLES

Hereinafter, Examples will be further described to more specifically illustrate the configurations and effects of the present invention. However, the present invention is not limited in any way by the following Examples.

Measurement of the contact angle was carried out using a DMo-602 manufactured by Kyowa Interface Science Co., Ltd. 2 µL of distilled water was dropped onto the surface using an auto dispenser, dynamic contact angles were measured at 100-msec intervals from 2000 msec to 3000 msec after dropping, and an average thereof was set as the contact angle.

### <Production of forward osmosis membrane module 1>

A polyketone having an intrinsic viscosity of 2.2 dL/g obtained by complete alternating copolymerization of ethylene and carbon monoxide was added to a 65% by mass resorcinol aqueous solution so as to obtain a polymer concentration of 15% by mass, and the mixture was stirred to dissolution at 80 °C for 2 h and defoamed to obtain a uniform transparent spinning stock solution. A wet hollow-fiber spinning machine equipped with a double spinneret was filled with the above spinning stock solution, and a 25% by mass methanol aqueous solution from the inside of the double spinneret and the above spinning stock solution from the outside thereof were each extruded into a coagulation tank filled with a 40% by mass methanol aqueous solution to form a hollow-fiber membrane by phase separation.

The obtained hollow-fiber membrane was cut into lengths of 70 cm, bundled, and washed with water. The water-washed hollow-fiber membrane bundle was subjected to solvent substitution with acetone, further subjected to solvent substitution with hexane, and then dried at 50 °C. The polyketone hollow-fiber membrane obtained as such had an outer diameter of 0.8 mm, an inner diameter of 0.5 mm, a porosity of 78%, and a membrane-wall maximum pore size of 130 nm. A hollow-fiber membrane bundle composed of 80 of the above polyketone hollow-fiber membranes was housed within a cylindrical module housing (cylinder case) of 2 cm in diameter and 10 cm in length and both end portions of the hollow-fiber membrane bundle were fixed with an adhesive, whereby a polyketone hollow-fiber supported membrane module was produced.

Using the obtained polyketone hollow-fiber supported membrane module, interfacial polymerization was carried out on the inner surface of each hollow-fiber membrane as follows. 20.216 g of m-phenylenediamine and 1.52 g of sodium lauryl sulfate were charged in a 1-L container and dissolved by further adding therein 991 g of pure water to prepare a first solution used for interfacial polymerization. 0.6 g of trimesic acid chloride was charged in a separate 1-L container and dissolved by adding therein 300 g of n-hexane to prepare a second solution used for interfacial polymerization.

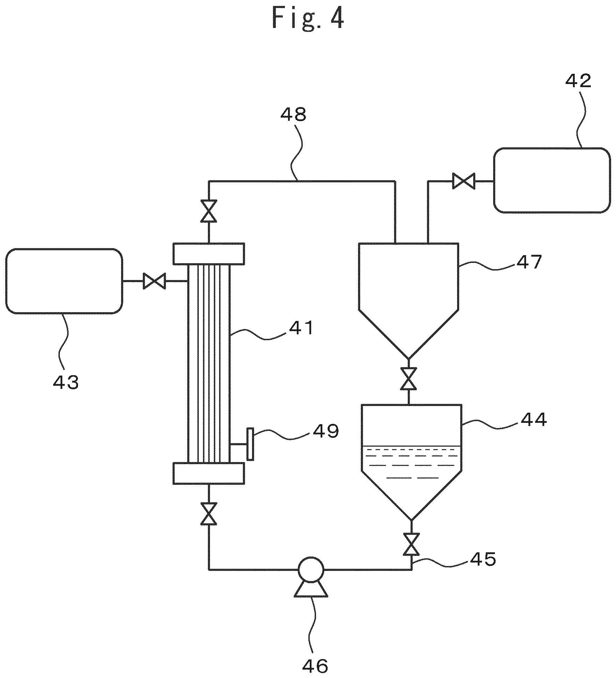

FIG. 4 is a schematic drawing describing an apparatus used for producing a forward osmosis membrane module 1. Referring to FIG. 4, a method of forming an active layer by interfacial polymerization is described. In the apparatus shown in FIG. 4, a second solution feed pipe 45 from a second solution storage tank 44 is connected into an inlet on the core side of the hollow-fiber supported membrane module 41 wherein the insides (core sides) of the hollow-fiber supported membranes are filled with the first solution, and a second solution feed pump 46 for pumping the second solution is connected in the middle. A second solution drainage pipe 48 from a second solution drainage tank 47 is connected into an outlet on the core side, and from the tank a core-side pressure regulator 42 for controlling the pressure of the hollow-fiber insides in the hollow-fiber supported membrane module 41 is connected. An end cap 49 is fitted into the lower conduit on the shell side of the hollow-fiber supported membrane module 41, and a shell-side pressure regulator 43 for controlling shell pressure is connected into the upper conduit. The first solution was filled into the core sides (insides of the hollow fibers) of the hollow-fiber supported membrane module 41, and after being left to stand for 5 min, the liquid was drained to mount the hollow fibers to the apparatus shown in FIG. 4, with the insides of the hollow fibers wetted with the first solution. The core-side pressure was set to normal pressure by the core-side pressure regulator 42, and the shell-side pressure was set to a reduced pressure of 10 kPa as the absolute pressure by the shell-side pressure regulator 43 (core-side pressure > shell-side pressure). After being left to stand in this state for 2 min, while maintaining these pressures, the second solution was fed by the second solution feed pump 46 at a flow rate of 40 cc/min for 3 min to the core side to carry out interfacial polymerization. The polymerization temperature was set to 25 °C.

The hollow-fiber supported membrane module was then removed from the apparatus and left standing within a thermostatic chamber set to 50 °C for 5 min to remove n-hexane by vaporization. Both of the shell side and the core side were washed with pure water.

In the above procedure, a forward osmosis membrane module 1 having an effective membrane area of about 90 cm² was obtained.

The obtained forward osmosis membrane module 1 comprised an active layer on the insides of the hollow fibers. The contact angle relative to the active layer surface was 40 degrees when measured, and the membrane was therefore hydrophilic.

### <Forward osmosis membrane module 2>

An oNF-2 membrane available from BORSIG Membrane Technology GmbH was set in a 4-port cell for flat membranes to form a forward osmosis membrane module 2 having an effective membrane area of 4 cm². According to the description in the company's catalog, the membrane is a silicone polymer-type membrane. The contact angle of the membrane was 99 degrees, and was therefore hydrophobic.

### <Example 1>

The forward osmosis membrane module 1 was set in the feed liquid concentration system shown in FIG. 3, and a concentration test was carried out at room temperature (23 °C). 350 g of a tetrahydrofuran (THF) solution containing 0.1% by mass of pentaacetylglucopyranose (GpA) (molecular weight of 390.34) as a valuable was used as a feed liquid. 350 g of toluene was used as a draw solution. The feed liquid and the draw solution were flowed in parallel flow mode at 36 mL/min and 50 mL/min, respectively, and after being circulated for 10 min, flux was calculated from the increase in mass of the draw solution using the effective membrane area of the module and the circulation time.

### <Examples 2 to 17 and Comparative Examples 1 to 5>

Except that the solvent in each feed liquid and the draw solute in each draw solution were as indicated in Table 1, a concentration test was carried out by the same procedure as in Example 1, and flux was calculated.

The draw solutes used were as follows.
Toluene: available from Fujifilm Wako Pure Chemical Industries, Ltd.
Normal hexane: available from Fujifilm Wako Pure Chemical Industries, Ltd.
Cyclohexane: available from Fujifilm Wako Pure Chemical Industries, Ltd.
Methyl tert-butyl ether: available from Fujifilm Wako Pure Chemical Industries, Ltd.
Methylcyclohexane: available from Fujifilm Wako Pure Chemical Industries, Ltd.
Triisopropylbenzene: available from Tokyo Chemical Industry Co., Ltd.
Isooctane: available from Fujifilm Wako Pure Chemical Industries, Ltd.
Decahydronaphthalene: available from Tokyo Chemical Industry Co., Ltd.
Ethyl acetate: available from Fujifilm Wako Pure Chemical Industries, Ltd.
Methanol: available from Fujifilm Wako Pure Chemical Industries, Ltd.
Ethanol: available from Fujifilm Wako Pure Chemical Industries, Ltd.
N,N-dimethylformamide: available from Fujifilm Wako Pure Chemical Industries, Ltd.

### <Evaluation method>

### [Dipolar interaction term and dispersion term of Hansen SP value]

Hansen SP & QSPR Model, an add-on for the commercially available software Winmostar 9.4.11, was used for calculations.

### [Hydrophobicity/Hydrophilicity of solvent in feed liquid and draw solute]

At 25 °C, when a solvent or draw solute was mixed with water at a volume ratio of 50:50 and stirred for 24 h using a φ 8 mm × 25 mm stirrer chip and a magnetic stirrer, the solvent or draw solute was determined by visual observation as hydrophilic if a one-phase state was maintained, and as hydrophobic if a two-phase state was maintained.

### [Boiling point of draw solute]

The value thereof is listed in the SDS (Safety Data Sheet) provided by the supplier of each substance.

The results are shown in Table 1.

### [Table 1]

**Table 1**

| | Feed liquid | | | | | Membrane | | Draw solution | | | | | | | | Flux (kg/m²/hr) |
|---|---|---|---|---|---|---|---|---|---|---|---|---|---|---|---|---|
| | Valuable | | Solvent | | | Membrane type | Hydrophilicity/ Hydrophobicity of active layer | Draw solute | | | | | | Additional component | | |
| | Type | Concentratio n (% by mass) | Type | Hydrophilic/ Hydrophobic | Organic solvent concentration (% by mass) | | | Type | Hydrophilic/ Hydrophobic | Dispersion term of SP value (MPa^{1/2}) | Dipolar interaction term of SP value (MPa^{1/2}) | Boiling point (°C) | Concentration (% by mass) | Type | Concentration (% by mass) | |
| Example 1 | GpA | 0.1 | THF | hydrophilic | 99.9 | forward osmosis membrane 1 | hydrophilic | toluene | hydrophobic | 18.02 | 2.58 | 111 | 100 | - | - | 27.8 |
| Example 2 | GpA | 0.1 | THF | hydrophilic | 99.9 | forward osmosis membrane 1 | hydrophilic | toluene | hydrophobic | 18.02 | 2.58 | 111 | 50 | THF | 50 | 17.5 |
| Example 3 | GpA | 0.1 | THF/water = 51/49 (mass ratio) | hydrophilic | 50.9 | forward osmosis membrane 1 | hydrophilic | toluene | hydrophobic | 18.02 | 2.58 | 111 | 100 | - | - | 18.6 |
| Example 4 | GpA | 0.1 | THF/water = 80/20 (mass ratio) | hydrophilic | 799 | forward osmosis membrane 1 | hydrophilic | toluene | hydrophobic | 18.02 | 2.58 | 111 | 100 | - | - | 201 |
| Example 5 | GpA | 0.1 | methanol | hydrophilic | 99.9 | forward osmosis membrane 1 | hydrophilic | toluene | hydrophobic | 18.02 | 2.58 | 111 | 100 | - | - | 130 |
| Example 6 | GpA | 0.1 | THF/MeOH = 50/50 (mass ratio) | hydrophilic | 99.9 | forward osmosis membrane 1 | hydrophilic | toluene | hydrophobic | 18.02 | 2.58 | 111 | 100 | - | - | 220 |
| Example 7 | GpA | 0.1 | THF | hydrophilic | 99.9 | forward osmosis membrane 1 | hydrophilic | normal hexane | hydrophobic | 14.93 | 1.98 | 69 | 100 | - | - | 43.1 |
| Example 8 | GpA | 0.1 | THF | hydrophilic | 99.9 | forward osmosis membrane 1 | hydrophilic | cyclohexane | hydrophobic | 16.56 | 1.91 | 81 | 100 | - | - | 41.7 |
| Example 9 | GpA | 0.1 | THF | hydrophilic | 99.9 | forward osmosis membrane 1 | hydrophilic | methyl tert-butyl ether | hydrophobic | 14.28 | 3.63 | 55 | 10 | THF | 90 | 8.9 |
| Example 10 | GpA | 0.1 | THF | hydrophilic | 99.9 | forward osmosis membrane 1 | hydrophilic | methyl tert-butyl ether | hydrophobic | 14.28 | 3.63 | 55 | 50 | THF | 50 | 30.4 |
| Example 11 | GpA | 0.1 | THF | hydrophilic | 99.9 | forward osmosis membrane 1 | hydrophilic | methyl tert-butyl ether | hydrophobic | 14.28 | 3.63 | 55 | 100 | - | - | 32.8 |
| Example 12 | GpA | 0.1 | THF | hydrophilic | 99.9 | forward osmosis membrane 1 | hydrophilic | methylcyclohexane | hydrophobic | 1626 | 1.50 | 101 | 100 | - | - | 43.4 |
| Example 13 | GpA | 0.1 | THF | hydrophilic | 99.9 | forward osmosis membrane 1 | hydrophilic | triisopropylbenzene | hydrophobic | 16.56 | 1.21 | 235 | 100 | - | - | 33.4 |
| Example 14 | GpA | 0.1 | THF | hydrophilic | 99.9 | forward osmosis membrane 1 | hydrophilic | isooctane | hydrophobic | 14.43 | 064 | 99 | 100 | - | - | 48.1 |
| Example 15 | GpA | 0.1 | THF | hydrophilic | 99.9 | forward osmosis membrane 1 | hydrophilic | decahydronaphthalene | hydrophobic | 16.90 | 0.63 | 190 | 100 | - | - | 31.5 |
| Example 16 | GpA | 0.1 | THF | hydrophilic | 99.9 | forward osmosis membrane 1 | hydrophilic | Ethyl acetate | hydrophobic | 15.73 | 6.31 | 77 | 100 | - | - | 11.0 |
| Example 17 | GpA | 0.1 | ethyl acetate | hydrophobic | 99.9 | forward osmosis membrane 2 | hydrophobic | isopropanol | hydrophilic | - | 7.18 | 83 | 100 | - | - | 5.1 |
| Comparative Example 1 | GpA | 0.1 | THF | hydrophilic | 99.9 | forward osmosis membrane 1 | hydrophilic | methanol | hydrophilic | 16.44 | 12.31 | 65 | 100 | - | - | <1.0 |
| Comparative Example 2 | GpA | 0.1 | THF | hydrophilic | 99.9 | forward osmosis membrane 1 | hydrophilic | ethanol | hydrophilic | 15.62 | 9.30 | 78 | 100 | - | - | <1.0 |
| Comparative Example 3 | GpA | 0.1 | THF/water = 51/49 (mass ratio) | hydrophilic | 50.9 | forward osmosis membrane 1 | hydrophilic | ethanol | hydrophilic | 15.62 | 9.30 | 78 | 100 | - | - | 4.6 |
| Comparative Example 4 | GpA | 0.1 | THF | hydrophilic | 99.9 | forward osmosis membrane 1 | hydrophilic | N,N-dimethylformamide | hydrophilic | 16.83 | 13.89 | 153 | 100 | - | - | <1.0 |
| Comparative Example 5 | GpA | 0.1 | ethyl acetate | hydrophobic | 99.9 | forward osmosis membrane 2 | hydrophobic | toluene | hydrophobic | - | 2.58 | 111 | 100 | - | - | <1.0 |

### REFERENCE SIGNS LIST

- 1: feed liquid concentration system
- 100: forward osmosis membrane module
- 110: housing
- 111: draw solution inlet
- 112: draw solution outlet
- 120: forward osmosis membrane
- 130: adhesive resin
- 121: substrate layer
- 122: active layer
- 200: feed liquid tank
- 300: draw solution tank
- 41: hollow-fiber supported membrane module
- 42: core-side pressure regulator
- 43: shell-side pressure regulator
- 44: second solution storage tank
- 45: second solution feed pipe
- 46: second solution feed pump
- 47: second solution drainage tank
- 48: second solution drainage pipe
- 49: end cap
- a: feed liquid
- b: solvent
- c: concentrated feed liquid
- d: draw solution
- LG: liquid level gauge
- P: pump

## Claims

1. A feed liquid concentration method for concentrating a feed liquid, wherein
the method comprises a concentration step of bringing a feed liquid and a draw solution into contact via a forward osmosis membrane,
the feed liquid comprises a valuable and 50% by mass or greater of an organic solvent,
the draw solution comprises a draw solute that is hydrophobic,
the forward osmosis membrane comprises a substrate layer and an active layer, and
the active layer is a hydrophilic active layer.

2. The feed liquid concentration method according to claim 1, wherein a dipolar interaction term of a Hansen SP value of the draw solute is 0.01 MPa^{1/2} or more and 6.40 MPa^{1/2} or less.

3. The feed liquid concentration method according to claim 1, wherein
the active layer comprises a benzene ring, and
a dispersion term of a Hansen SP value of the draw solute is 10.00 MPa^{1/2} or more and less than 17.00 MPa^{1/2}.

4. A feed liquid concentration method for concentrating a feed liquid, wherein
the method comprises a concentration step of bringing a feed liquid and a draw solution via a forward osmosis membrane,
the feed liquid comprises a valuable and 50% by mass or greater of an organic solvent,
the draw solution comprises a draw solute that is hydrophilic,
the forward osmosis membrane comprises a substrate layer and an active layer, and
the active layer is a hydrophobic active layer.

5. The feed liquid concentration method according to claim 4, wherein a dipolar interaction term of a Hansen SP value of the draw solute is 7.10 MPa^{1/2} or more and 17.00 MPa^{1/2} or less.

6. The feed liquid concentration method according to any one of claims 1 to 5, wherein a boiling point of the draw solute is lower than 300 °C.

7. The feed liquid concentration method according to any one of claims 1 to 5, wherein the forward osmosis membrane is a hollow-fiber membrane.

8. The feed liquid concentration method according to any one of claims 1 to 5, wherein the substrate layer comprises at least one selected from the group consisting of polysulfone, polyethersulfone, polyvinylidene fluoride, polyacrylonitrile, polyethylene, polypropylene, cellulose-based polymer, polyketone, polyamide, polyimide, polyether ether ketone, and polybenzimidazole.

9. The feed liquid concentration method according to claim 8, wherein the active layer is constituted of polyamide.

10. The feed liquid concentration method according to any one of claims 1 to 5, wherein a molecular weight of the valuable is 100 to 3,000,000.

11. The feed liquid concentration method according to any one of claims 1 to 5, wherein the valuable is a pharmaceutical, a cosmetic, or a functional chemical, or a feedstock thereof.

12. The feed liquid concentration method according to any one of claims 1 to 5, wherein the feed liquid is supplied continuously and a concentrated feed liquid is delivered continuously in the concentration step.

13. The feed liquid concentration method according to any one of claims 1 to 5, wherein the organic solvent is at least one selected from the group consisting of tetrahydrofuran, 2-methyl tetrahydrofuran, 1,4-dioxane, methanol, ethanol, 1-propanol, 2-propanol, acetonitrile, N,N-dimethylformamide, dimethylacetamide, N-methylpyrrolidone, dimethylsulfoxide, sulfolane, chloroform, acetone, methyl butyl ketone, and pyridine.

14. A feed liquid concentration system for concentrating a feed liquid, wherein
the feed liquid concentration system comprises a forward osmosis membrane module configured to receive a feed liquid and a draw solution and to bring the feed liquid and the draw solution into contact via a forward osmosis membrane,
the feed liquid comprises a valuable and 50% by mass or greater of an organic solvent,
the draw solution comprises a draw solute that is hydrophobic,
the forward osmosis membrane comprises a substrate layer and an active layer, and
the active layer is a hydrophilic active layer.

15. The feed liquid concentration system according to claim 14, wherein a dipolar interaction term of a Hansen SP value of the draw solute is 0.01 MPa^{1/2} or more and 6.40 MPa^{1/2} or less.

16. The feed liquid concentration system according to claim 14, wherein
the active layer comprises a benzene ring, and
a dispersion term of a Hansen SP value of the draw solute is 10.00 MPa^{1/2} or more and less than 17.00 MPa^{1/2}.

17. A feed liquid concentration system for concentrating a feed liquid, wherein
the feed liquid concentration system comprises a forward osmosis membrane module configured to receive a feed liquid and a draw solution and to bring the feed liquid and the draw solution into contact via a forward osmosis membrane,
the feed liquid comprises a valuable and 50% by mass or greater of an organic solvent,
the draw solution comprises a draw solute that is hydrophilic,
the forward osmosis membrane comprises a substrate layer and an active layer, and
the active layer is a hydrophobic active layer.

18. The feed liquid concentration system according to claim 17, wherein a dipolar interaction term of a Hansen SP value of the draw solute is 7.10 MPa^{1/2} or more and 17.00 MPa^{1/2} or less.

19. The feed liquid concentration system according to any one of claims 14 to 18, wherein a boiling point of the draw solute is lower than 300 °C.

20. The feed liquid concentration system according to any one of claims 14 to 18, wherein the forward osmosis membrane is a hollow-fiber membrane.

21. The feed liquid concentration system according to any one of claims 14 to 18, wherein the substrate layer comprises at least one selected from the group consisting of polysulfone, polyethersulfone, polyvinylidene fluoride, polyacrylonitrile, polyethylene, polypropylene, cellulose-based polymer, polyketone, polyamide, polyimide, polyether ether ketone, and polybenzimidazole.

22. The feed liquid concentration system according to claim 21, wherein the active layer is constituted of polyamide.

23. The feed liquid concentration system according to any one of claims 14 to 18, wherein the valuable is a compound having a molecular weight of 100 to 3,000,000.

24. The feed liquid concentration system according to any one of claims 14 to 18, wherein the valuable is a pharmaceutical, a cosmetic, or a functional chemical, or a feedstock thereof.

25. The feed liquid concentration system according to any one of claims 14 to 18, wherein the feed liquid is supplied continuously to the forward osmosis membrane module and a concentrated feed liquid is delivered continuously from the forward osmosis membrane module.

26. The feed liquid concentration system according to any one of claims 14 to 18, wherein
the organic solvent is at least one selected from the group consisting of tetrahydrofuran, 2-methyl tetrahydrofuran, 1,4-dioxane, methanol, ethanol, 1-propanol, 2-propanol, acetonitrile, N,N-dimethylformamide, dimethylacetamide, N-methylpyrrolidone, dimethylsulfoxide, sulfolane, chloroform, acetone, methyl butyl ketone, and pyridine.
